# EUROPÄISCHE PATENTSCHRIFT

(11) **EP 2 089 132 B1**
(45) Veröffentlichungstag und Bekanntmachung des Hinweises auf die Patenterteilung: **25.05.2016**
(21) Anmeldenummer: 07801326.5
(22) Anmeldetag: 05.09.2007
(51) Int. Cl.: B01D 25/12

(54) **VERFAHREN ZUM ENTFEUCHTEN UND TROCKNEN VON FESTSTOFF-FLÜSSIGKEITSGEMISCHEN UND VERWENDUNG EINER VORRICHTUNG ZUR DURCHFÜHRUNG DES VERFAHRENS**
METHOD FOR DEWATERING AND DRYING SOLID-LIQUID MIXTURES AND USE OF A DEVICE FOR CARRYING OUT THE INVENTION
PROCÉDÉ DE DÉSHUMIDIfiCATION ET DE SÉCHAGE DE MÉLANGES DE SOLIDES ET DE LIQUIDES ET UTILISATION D'UN DISPOSITIF POUR METTRE EN OEUVRE LE PROCÉDÉ

(30) Priorität: 14.09.2006 DE 102006043969; 22.08.2007 DE 102007039583
(43) Veröffentlichungstag der Anmeldung: 19.08.2009
(73) Patentinhaber: dehydry Anlagenbau AG, 4058 Basel (CH)
(72) Erfinder: MÜTZENBERG, Willy, CH-4566 Kriegstetten (CH); HOFFMANN, Egon, 04105 Leipzig (DE)
(74) Vertreter: Kailuweit & Uhlemann Patentanwälte Partnerschaft mbB
(86) Internationale Anmeldenummer: PCT/DE2007/001591
(87) Internationale Veröffentlichungsnummer: WO 2008/031401

(56) Entgegenhaltungen:
- EP-A- 0 759 318
- WO-A-2004/024290
- WO-A-2005/016487
- DE-A1- 19 843 028
- DE-U1- 20 006 891
- GB-A- 2 258 621
- US-B1- 6 387 282

## Beschreibung

Die Erfindung betrifft ein Verfahren sowohl zum Entfeuchten als auch zum Trocknen von Suspensionen und Schlämmen oder anderen Feststoff-Flüssigkeitsgemischen nach dem Oberbegriff des Anspruchs 1 und die Verwendung einer als Filterpressentrockner ausgebildeten Vorrichtung nach dem Oberbegriff des Anspruchs 4 zur Anwendung des Verfahrens.

### Stand der Technik

Feststoff-Flüssigkeitsgemische, die bei chemischen Produktionsverfahren, stofflicher oder energetischer Abfallverwertung, Entsorgung von Abfällen oder bei der Lebensmitteltechnik und Aufbereitungstechnik anfallen, werden üblicherweise in zwei getrennten Anlagen entfeuchtet und getrocknet, z. B. durch mechanisches Entwässern mit Zentrifugen, Bandpressen oder Filterpressen in einer ersten Stufe und thermisches Trocknen in Drehtrommel-, Scheiben-, Band- oder Paddeltrogtrocknern in einer sich anschließenden zweiten Stufe. Die mehrstufigen Anlagen erfordern einen hohen Geräteaufwand und sind kostenintensiv. Da die mehrstufigen Anlagen meistens kontinuierlich betrieben werden, muss in möglichst kurzen Kontaktzeiten getrocknet werden. Zusätzlich werden große Temperaturdifferenzen von 100 - 500 °C zwischen dem Trocknungsgut und den Heizflächen oder Trocknungsmitteln benötigt. Der Temperaturbereich muss zwischen 150 bis 600 °C liegen. Die Verwendung von Wärmeenergie auf diesem hohen Temperaturniveau, das sonst der Stromerzeugung vorbehalten bleibt, allein für die Wasserverdampfung in Trocknungsanlagen zu verwenden, ist ökonomisch und ökologisch nicht sinnvoll.

Aus der EP 0 263 197 B1 ist eine Vorrichtung zum Entwässern und Trocknen von in Flüssigkeiten dispergierten Feststoffteilchen bekannt, wobei unter Vermeidung von aufwändigen, mehrstufigen Anlagen und Apparaturen in einer einzigen Vorrichtung die mechanische Entwässerung und anschließend die thermische Trocknung durchgeführt wird. Die Entfeuchtung und Trocknung erfolgt diskontinuierlich im Chargenbetrieb. Im Gegensatz zu den kontinuierlich betriebenen Trocknungsverfahren sind beim diskontinuierlichen Chargenbetrieb die Kontaktzeiten deutlich länger. Die Trocknung kann daher mit kleinen Temperaturdifferenzen zwischen Heizfläche und Trockengut von 10 bis 90°C bei einem Temperaturniveau von 20 bis 130°C durchgeführt werden. Nachteilig ist jedoch bei diesem, als einfache Vakuumtrocknung bezeichneten Verfahren die langsame Trocknung des Gutes von Außen nach Innen in Form einer Trocknungsfront, die von der Heizfläche aus in das Innere des Trocknungsgutes hinein wandert. An der Heizfläche bildet sich dabei im Trocknungsgut eine extrem trockene Schicht, die wie eine Isolationswand wirkt. Der Wärmetransport ins Innere des Trockengutes wird dadurch stark behindert und bei fortschreitender Trocknung wächst diese Isolationswand parallel zur Heizfläche immer stärker an. Als Folge dieser Schichtenbildung werden für das Erreichen des Trocknungszieles sehr lange Trocknungszeiten benötigt.

In der EP 0 759 318 B1 wird ein Verfahren zum Entfeuchten und Trocknen von Feststoff-Flüssigkeitsgemischen beschrieben, bei dem der Trocknungsvorgang in einer einzigen Vorrichtung durch Pendeln zwischen zwei Druckstufen bzw. zwei Temperaturstufen wirksam beschleunigt wird. Der Wärmetransport von einem mit einem Wärmeträgermedium beheizten Diaphragma zur Verdampfungsfront im Inneren des Trocknungsgutes und der Dampftransport von innen nach außen werden durch die Einleitung von Spülgas gegenüber der Lösung nach EP 0 263 197 B1 deutlich verbessert. Das Spülgas mindert den Aufbau einer Isolationswand parallel zur Heizfläche. So bleibt auch bei fortschreitender Trocknung der Wärmetransport über Flüssigkeitsbrücken ins Innere des Trockengutes bestehen und die Trocknungszeiten werden kürzer. Insgesamt sind die Trocknungszeiten aber noch zu lange. Gegenüber den kontinuierlich betriebenen zweistufigen Trocknungsanlagen ist deshalb das Trocknungsverfahren nach EP 0 759 318 B1 im Markt noch nicht durchsetzbar. Eine Wettbewerbsfähigkeit kann erst mit weiteren Verbesserungen erreicht werden.

Die Wärmeübertragung vom Wärmeträgermedium bis zum Trocknungsgut setzt sich aus den Wärmeströmen in den einzelnen hintereinander liegenden Stoffschichten zusammen. Da üblicherweise für die Diaphragmen Werkstoffe aus Polypropylen, EPDM oder anderen Kunststoffen eingesetzt werden, wird die Wärmeübertragung von dem Wärmestrom durch den Werkstoff des ausgewählten Diaphragmas begrenzt, wobei die eingesetzten Kunststoffe eine niedrige Wärmeleitfähigkeit und geringe Temperaturbeständigkeit aufweisen.

Eine Verbesserung des Wärmetransports kann durch den Einsatz von Heizfläche aus Metall erzielt werden. So ist aus der Patentschrift nach CH 685 805 A5 eine geschweißte Kammerheizplatte aus Edelstahl mit der typischen meanderförmigen Führung des Heizwassers bekannt, mit der relativ kurze Trocknungszeiten erreicht werden können. Die geschweißten Kammerheizplatten aus Edelstahl haben jedoch den Nachteil, dass die Kosten für das Ausgangsmaterial und auch die Fertigungskosten sehr hoch sind. Hinzu kommt, dass die Haltbarkeit der Schweißnähte bei den üblichen Trocknungsbedingungen (hohe Temperaturen / aggressive Flüssigkeiten) stark eingeschränkt ist. Insgesamt haben sich geschweißte Kammerheizplatten aus Metall aber nicht bewährt.

### Aufgabe

Die Aufgabe der Erfindung besteht darin, ein Verfahren und eine Vorrichtung zur Anwendung des Verfahrens zu entwickeln, mit denen das Entwässern und Trocknen von Feststoff-Flüssigkeitsgemischen in einer einzigen Anlage mit einer kostengünstigen Ausrüstung und bei kurzen Trocknungszeiten sowie niedrigen Trocknungstemperaturen, die unterhalb von 130 °C liegen, erreicht werden kann.

Diese Aufgabe wird mit einer als Filterpressentrockner ausgeführten Vorrichtung in folgenden Verfahrensschritten gelöst:
a) Zuführung der zu behandelnden Trübe in die Vorrichtung,
b) Ableiten des Filtrats über die Kanäle bei gleichzeitigem Zurückhalten der Feststoffanteile als Filterkuchen durch das Filtermedium,
c) Aufheizen des Filterkuchens auf Übertemperatur oberhalb der Siedetemperatur durch Einschalten des Heizmittelkreislaufs,
d) Andrücken des bei der Entwässerung gebildeten Filterkuchens durch Membranpressung mit Hilfe eines Gases oder einer Flüssigkeit,
e) Anschließen einer Vakuumanlage an die Kanäle und Evakuieren des Brüdenraums und des Porenraums im Filterkuchen, womit die Trocknung des Filterkuchens begonnen wird, durch den Entzug der Verdampfungsenergie aus dem Inneren des Filterkuchens kühlt sich der Filterkuchen auf Siedetemperatur ab,
f) Befüllen des Brüdenraums und des Porenraums im Filterkuchen mit Luft oder Inertgas von bis zur 1 bar Überdruck, womit eine Ruhephase bei der Trocknung eingeleitet wird, der Filterkuchen wird wieder auf Übertemperatur aufgeheizt,
g) Wiederholung der Schritte e) und f) bis zum Erreichen des beabsichtigten Trocknungsgrades,
h) Abschalten des Heizmittelkreislaufs und Beenden der Membrananpressung und
i) Entfernen des getrockneten Filterkuchens in bekannter Weise aus der Vorrichtung.

Dieses Verfahren wird als zyklische Vakuum-Übertemperatur-Kontakttrocknung bezeichnet. Dessen Besonderheit besteht darin, dass sich der Filterkuchen bei der Trocknung zyklisch von Übertemperatur auf Siedetemperatur abkühlt und sich in den Ruhepausen ohne Vakuum wieder auf Übertemperatur aufheizt, wobei diese in der Ruhepause zugeführte Energie, die zu der Erwärmung auf Übertemperatur führt, bei dem nächsten Zyklus im Inneren des Filterkuchens wieder als Verdampfungsenergie für die Trocknung zur Verfügung steht. Zusammenfassend werden durch Verbesserungen bei der Wärmeleitung und dem Brüdenabzug folgende Fortschritte erzielt:
1. Bei einer Vakuumtrocknung im Übertemperaturbereich oberhalb der Siedetemperatur ist der Brüdenstrom um ein Vielfaches höher als bei einer Vakuumtrocknung bei Siedetemperatur. Denn zusätzlich zu der von außen über die Metallfilterplatten zugeführten Wärme steht für die Verdampfung noch die in der Ruhepause ohne Vakuum gespeicherte innere Energie aus der Erwärmung auf Übertemperatur zur Verfügung. Zusätzlich bewirkt die in dem ganzen Filterkuchen verteilte innere Wärme eine Wasserverdampfung, d.h. Trocknung auch im Innern des Filterkuchens.
2. Das Befüllen der Porenräume mit Luft oder Inertgas bewirkt im Filterkuchen mehrere Effekte. So löst die Anwesenheit von Luft eine kapillare Filmströmung von den großen Kapillaren zurück zu den kleinen Kapillaren aus. Die Flüssigkeit verteilt sich wieder neu über den gesamten Porenraum. Für die Leitung der Wärme von den Heizflächen in die Mitte des Filterkuchens stehen wieder die neu gebildeten Flüssigkeitsbrücken und Flüssigkeitsfilme zur Verfügung. An der nachfolgenden Verdampfung nimmt deshalb die gesamte innere große Flüssigkeitsoberfläche teil. Es wird eine innere Trocknung erreicht, die viel schneller und größer ist als die Verdampfung an einer Trocknungsfront, die sich parallel zu der außen liegenden Heizfläche nach innen in den Filterkuchen hinein bewegt.

Da der Dampf in den Poren bei Anwesenheit von Luft schneller strömt als bei Abwesenheit von Luft, bewirkt die zyklische Befüllung der Poren mit Luft oder Inertgas zusätzlich einen schnelleren Dampftransport von innen nach außen ins Freie außerhalb des Filterkuchens. Damit wird eine Rückkondensation innerhalb des Filterkuchens vermieden.

Auch der Wärmetransport von den außen liegenden Heizflächen in das Innere des Filterkuchens wird durch die zyklische Befüllung der Poren mit Luft oder Inertgas verbessert. Denn nach dem so genannten Heat-Pipe-Effect strömt der Dampf nur in Anwesenheit von Luft von den heißen, feuchten Porenwänden in Nähe der außen liegenden Heizfläche zu den kalten Porenwänden ins Innere des Filterkuchens. Die kalten Porenwände werden zusätzlich zur Wärmeübertragung durch Wärmeleitung noch durch die Kondensationswärme des Dampfes aufgeheizt. Der Dampftransport unterstützt die Wärmeleitung überproportional, da gekoppelt mit dem Dampf auch die Kondensationswärme transportiert wird. Dieser so genannte Heat-Pipe-Effect ist besonders in dem Temperaturbereich von 60° bis 90°C dominierend wirksam.
3. Bei der Evakuierung wird der Dampf aus den Porenräumen des Filterkuchens in den Brüdenraum der Drainage geleitet, der mit Hilfe eines Drainagemediums als Spalt über die gesamte Heizfläche gebildet wird. Über diesen Spalt werden die Brüden von der gesamten Heizfläche/Drainagefläche zur umlaufenden Dehnungsfuge und von dort in den umtaufenden Ringkanal geführt. Die Brüden werden aus dem umlaufenden Ringkanal in die größeren Brüdenabzugskanäle zum Kondensator und zur Vakuumanlage geleitet. Auf dem Weg von den Porenräumen des Filterkuchens über den Brüdenraum der Drainage zu dem umlaufenden Ringkanal werden die Brüdengeschwindigkeiten von Stufe zu Stufe höher und die Druckverluste wegen den größer werdenden Kanalabmessungen von Stufe zu Stufe kleiner.
4. Da bei ansteigendem Vakuum die Dichte der Brüden als Folge der Expansion stark abnimmt, muss das Vakuum bei der Evakuierung gezielt langsam aufgebaut werden, um bei der Strömung der Brüden zum Kondensator in den Absaugkanälen eine Verblockung mit totalem Druckverlust zu vermeiden. Denn bei einer Verblockung würde in dem Porenraum des Filterkuchens kein Vakuum entstehen und ohne Vakuum könnte auch keine Wasserverdampfung, d.h. Trocknung stattfinden. Die Nachteile der starken Expansion der Brüden bei ansteigendem Vakuum bzw. abnehmenden Druck werden durch die gezielte Verzögerung beim Aufbau des Vakuums vermieden. Dieser mit der Anwendung der Erfindung erzielbare vorteilhafte Trocknungseffekt wird in der folgenden Abbildung, in der Messdaten der bekannten einfachen Vakuumtrocknung bei Siedetemperatur und der zyklischen Vakuum-Übertemperatur-Kontakttrocknung gegenüber gestellt werden, besonders deutlich. 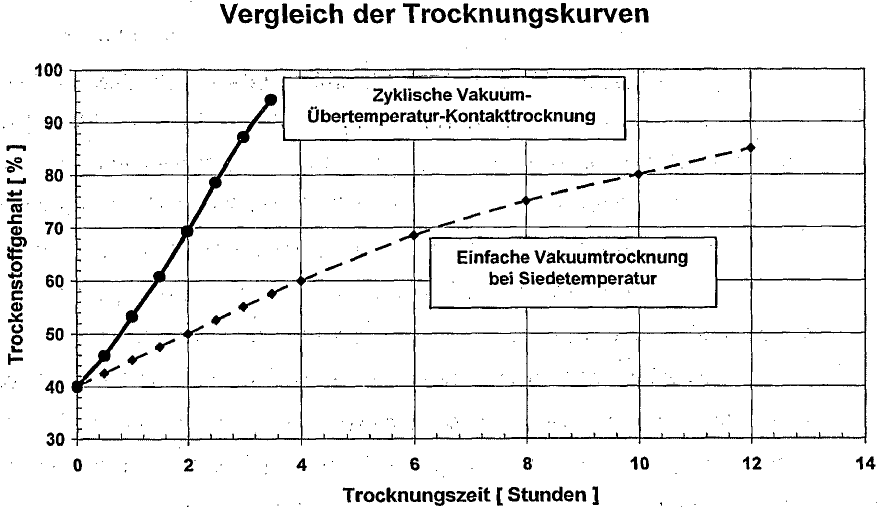
Abb.: Der erzielbare Trockenstoffgehalt bei der einfachen Vakuumtrocknung bei Siedetemperatur im Vergleich zur zyklischen Vakuum-Übertemperatur-Köntakttrocknung in Abhängigkeit von der Trocknungszeit

Die Abbildung zeigt, dass bei der einfachen Vakuumtrocknung bei Siedetemperatur gegenüber der zyklischen Vakuum-Übertemperatur-Kontakttrocknung im normalen Anwendungsfall eine deutlich kürzere Trocknungszeit erzielt wird. So wird bereits nach 2 Stunden ein Trockenstoffgehalt von 70 % und nach 3 Stunden von 87 % erreicht, während bei der einfachen Vakuumtrocknung nach 2 Stunden erst 50 % und nach 3 Stunden erst 55 % erreicht werden. Durch den ständigen Wechsel zwischen Vakuum und Befüllen mit Luft oder Inertgas wird die Trocknungsgeschwindigkeit enorm gesteigert und die Trocknungszeiten werden auf einen Bruchteil der sonst notwendigen Zeit reduziert, so dass hohe Durchsatzmengen erzielt werden.
Da das neue Trocknungsverfahren bei einem niedrigen Temperaturniveau unterhalb von 130 °C betrieben wird, kann als Wärmeenergie für die Wasserverdampfung auch Abfallwärme eingesetzt werden, die bei der Verstromung anfällt und an vielen Standorten kostengünstig oder sogar kostenlos zur Verfügung steht.

Vorteilhafte Ausführungen des Verfahrens sind Gegenstand der Unteransprüche 2 und 3.
So bewirkt das Andrücken des Filterkuchens an die Oberflächen der beheizten Metallheizkammerfilterplatten beim Aufheizen mit steigendem Druck nach Anspruch 2, dass durch den direkten Kontakt eine bessere Wärmeübertragung von den Heizplatten zum Filterkuchen erfolgt. Dadurch wird die mit dem Entwässerungsprozess einhergehende Volumenverringerung des Filterkuchens entgegen gewirkt, da der abnehmende Kontakt zu einer schlechteren Wärmeübertragung führen würde. Der Druck wird bei der Membranpressung in Stufen erhöht, um innere Reibungswiderstände im Filterkuchen zu überwinden. Dabei hat sich eine Druckerhöhung in Stufen von 3 bar als besonders günstig erwiesen.
Durch den gezielt langsamen Aufbau des Vakuums werden die Brüdengeschwindigkeiten in den Kanälen niedrig gehalten und eine Verblockung mit totalem Druckverlust wird vermieden. Da die Dichte der Brüden der verzögerten Expansion länger hoch bleibt, resultiert aus der Verzögerung ein deutlich größerer Brüdenmassenstrom.

Ein Filterpressentrockner als Vorrichtung zur Anwendung des vorstehend beschriebenen Verfahrens muss insbesondere dazu geeignet sein, den Wechsel zwischen den Verfahrensschritten Erzeugen eines Vakuums und Befüllen des Trocknungsraums mit Luft oder Inertgas zu günstigen Bedingungen zu vollziehen und die bei der verbesserten Trocknung anfallenden größeren Brüdenmengen schnell abführen zu können.

So ist für den Filterpressentrockner die Verwendung eines Grundkörpers vorgesehen, der die Maße und Ausführungsform einer handelsüblichen Kammerfilterplatte aufweist, wobei beidseitig in den durch Stützwand und Kammerrand ausgebildeten halben Kammern die Metallplatten angeordnet sind. Diese Metallheizkammerfilterplatten werden im Plattenpaket mit Membranheizkammerfilterplatten kombiniert.
Die beiden Metallplatten werden durch Verschraubungen gegen Distanzstücke fest eingespannt und bei dem mittigen Kanal zur Suspensionszufuhr fest zentriert und mit dem Grundkörper verschraubt. Diese Ausbildung ist mit den Vorteilen verbunden, dass ein verwindungssteifer und druckstabiler Metallplättenkörper gebildet wird, der gegenüber Grundkörper und Stützwand frei schwimmend gelagert ist und mit der innen liegenden Stützwand den Heizraum bildet. Besonders vorteilhaft sind die mechanische Stabilität des Metallplattenkörpers gegen den Druck des Heizmediums und die Unabhängigkeit des Metallplattenkörpers bei den ungleichen Wärmedehnungen des Metallplattenkörpers gegenüber dem aus Stützwand und Kammerrand gebildeten Grundkörper aus Kunststoff.

Eine besondere Ausbildung ist die Verwendung eines Grundkörpers, der die Maße und Ausführungsform einer handelsüblichen Membrankammerfilterplatte statt einer Kammerfilterplatte aufweist, wobei auf einer Seite der Filterplatte auf dem Grund der einen halben Kammer eine Metallplatte angeordnet ist und auf der anderen Seite der Membrankammerfilterplatte auf dem Grund dieser halben Kammer eine beheizbare Membrane angeordnet ist. Diese Ausbildung ist mit dem Vorteil verbunden, dass alle Filterplatten eines Plattenpaketes gleich ausgeführt werden können, ausgenommen die Kopffilterplatte und die Endfilterplatte.

Am äußeren Rand der Metallplatte weist der Grundkörper eine umlaufende Dehnungsfuge auf, die zum Einen dazu vorgesehen ist, die unterschiedlichen Dehnungen der für die Metallheizkammerfilterplatte eingesetzten Materialien zuzulassen, und zum Anderen bei der Filtration als Filtratablauf und bei der Trocknung als Brüdenabzug genutzt wird.
Unterhalb der Dehnungsfuge ist ein umlaufender Ringkanal eingearbeitet, der für die Brüden als Expansionsraum, d. h. Brüdendom dient. Diese Ausbildung ist besonders vorteilhaft für die Absaugung der großen Brüdenmengen, denn die Brüden durchströmen die Porenräume im Filterkuchen mit Stömungsquerschnitten im µm-Bereich und im Drainagespalt im mm-Bereich und im Ringkanal im cm-Bereich, so dass die Brüdengeschwindigkeiten entlang des Weges stufenweise gesteigert werden können und die Druckverluste entlang des Weges stufenweise absinken.

Die glatten Oberflächen der Metallplatten sind fertigungstechnisch einfach und preiswert herzustellen und verfahrenstechnisch von Vorteil. Die glatten Oberflächen werden bei dem erfindungsgemäßen Trocknungsverfahren in den Ruhepausen durch kapillare Filmströmung benetzt und diese Flüssigkeitsfilme werden in den Vakuumphasen wieder verdampft, d. h. getrocknet. Um bei der Filtration einen ungehinderten Filtratablauf und bei der Trocknung einen schnellen Brüdenabzug zu bekommen, wird auf dieser glatten Oberfläche ein separates, speziell ausgeführtes Drainagemedium aus einem Metall- oder Textilgewebe angeordnet.

Eine Vorrichtung zur Anwendung des Verfahrens gemäß der Erfindung wird nachstehend an Hand eines Beispiels und mit Bezug auf die Zeichnungen näher beschrieben. Die Zeichnungen zeigen
- Fig. 1: eine zu einem Filterpressentrockner gehörenden Metallheizfilterkammerplatte mit auf beiden Seiten angeordneten Metallplatten und eine benachbarte Membranheizkammerfilterplatte im Schnitt und
- Fig. 2: die obere Hälfte einer kombinierten Metall-Membranheizkammerfilterplatte, die auf der einen Seite mit einer Metallplatte und auf der anderen Seite mit einer Membrane ausgerüstet ist, im Schnitt.

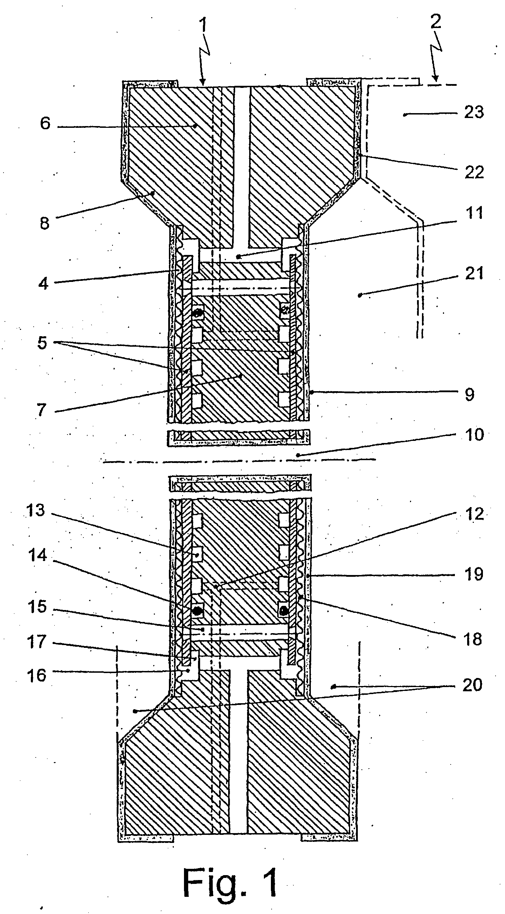

Die in der Fig. 1 dargestellte Metallheizkammerfilterplatte 1 ist eine von mehreren, mit denen ein Filterpressentrockner zum Entfeuchten und Trocknen von Feststoff-Flüssigkeitsgemischen ausgerüstet werden kann. Diese Metallheizkammerfilterplatte z1 entspricht in ihrem Aufbau mit dem mit einer Stützwand 7 und einem Kammerrand 8 versehenen Grundkörper 6 einer konventionellen, handelsüblichen Kammerfilterplatte. Der hauptsächliche Vorteil der Verwendung einer solchen Kammerfilterplatte besteht in den niedrigen Herstellungskosten.
Der Grundkörper besitzt einen Kanal 10 für die Zuführung der Suspension in die ganze Kammer 21 und ist mit einem Filtermedium 19 umspannt. Auf beiden Seiten des Grundkörpers 6 befinden sich Metallplatten 5, die mit Verschraubungen und Distanzstücken 15 zu einem Metallplattenkörper zusammengespannt werden und die Stützwand 7 abdecken. Die Metallplatten 5 schließen mit Hilfe des Dichtrings 14 den Heizraum 13, der in Form von Kanälen die Oberfläche der Stützwand 7 durchzieht, fluiddicht gegenüber der ganzen Kammer 21 ab. Die ganze Kammer 21 selber wird aus zwei halben Kammern 20 gebildet. Die halbe Kammer 20 wiederum wird vom Kammergrund 9, der zugleich die Filterfläche ist, und dem Kammerrand 8 begrenzt. Die ganze Kammer 21 entsteht dadurch, dass die Nachbarkammerfilterplatte 23 und die Metallheizkammerfilterplatte 1 nebeneinander angeordnet werden.
Nach außen hin wird die ganze Kammer 21 durch die Dichtfläche 22, die mit dem Filtermedium 19 belegt ist, abgedichtet. Der Grundkörper 6 ist mit einer Reihe von Kanälen 10, 11, 12 durchsetzt, die unterschiedliche Funktionen aufweisen. Der Kanal 10 dient der Zuführung der Suspension in die einzelnen ganzen Kammern 21 des Filterpressentrockners. Der im Grundkörper 6 integrierte Kanal 11 dient als Filtratablauf und Brüdenabzug und ist dabei mit dem umlaufenden Ringkanal 17, der umlaufenden Dehnungsfuge 16 und der Drainage auf der Metallplatte 5 verbunden, über die die Fluidverbindung zur ganzen Kammer 21 hergestellt wird. Der ebenfalls in den Grundkörper 6 eingearbeitete Kanal 12 dient der Zufuhr und dem Abfluss des Heizmediums. Über diesen Kanal 12 wird der Heizraum 13 mit dem vorzugsweise aus Wasser bestehenden Heizmedium befüllt.

Zwischen dem Grundkörper 6 und der Metallplatte 5 ist im äußeren Rand des Heizraums 13 ein Dichtring 14 angeordnet, der den Heizraum 13 gegenüber der ganzen Kammer 21 abdichtet. Die Metallplatten 5 sind mit Verschraubungen und Distanzstücken 15 zu einem Metallplattenkörper zusammengespannt, der den Grundkörper 6 schwimmend umschließt. Direkt auf der Metallplatte 5 befindet sich ein Drainagemedium 18, durch welches das Filtrat und die Brüden abfließen.

Zu dem Filterpressentrockner gehört eine zeichnerisch nicht dargestellte Vakuumanlage.

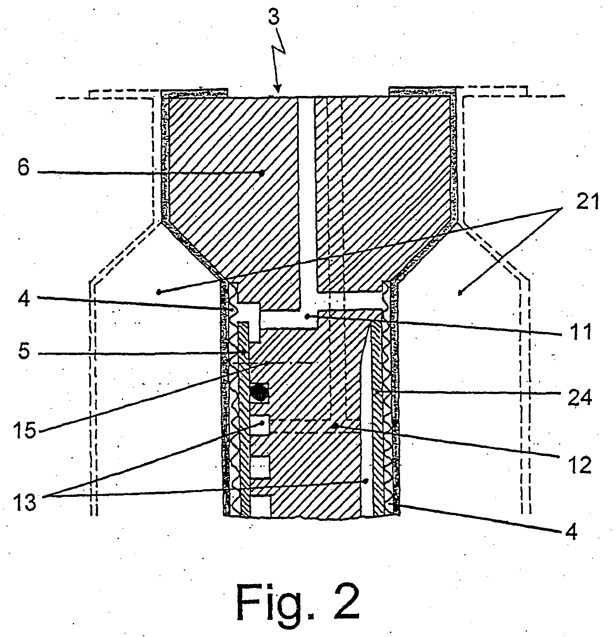

In der Zeichnung nach Fig. 2 wird das obere Teil einer kombinierten Metall-Membranheizkammerfilterplatte 3 gezeigt. Deren Grundkörper 6 besteht aus einer Membranheizkammerfilterplatte 2, bei der auf einer Seite das erfindungsgemäße Konzept der Metallheizkammerfilterplatte 1 mit Metallplatte 5 und umlaufenden Dehnungsfuge 16 und Ringkanal 17 verwirklicht ist, während die andere Seite unverändert bleibt. Sowohl auf der heizbaren Membrane 24, als auch auf der Metallplatte 5 ist ein Drainagemedium 18 angeordnet, welches den Drainagespalt 4 ausbildet. Bei dieser kombinierten Metall-Membranheizkammerfilterplatte 3 ist ausgehend von einer Membranheizkammerplatte 2 eine beheizbare Membrane 24 praktisch durch eine Metallplatte 5 ersetzt worden.

Der Filterpressentrockner kann als Vorrichtung zur Anwendung des Verfahrens unterschiedlich ausgebildet sein. So können im Filterpressentrockner folgende Plattenarten in unterschiedlichen Kombinationen und Anordnungen zueinander zur Anwendung kommen:
- Metallheizkammerfilterplatten,
- Membranheizkammerfilterplatten
- kombinierte Metall-Membranheizkammerfilterplatten und/oder
- Kammerfilterplatten.
Diese Platten können aus unterschiedlichen Materialien bestehen und werden so angeordnet, dass je nach Anwendungsfall ein optimaler Trocknungseffekt eintritt.

Das Verfahren mit einem Filterpressentrockner, der mit einer definierten Anzahl von Metallheizfilterkammerplatten und/oder Membranheizkammerfilterplatten nach den Fig. 1 und 2 ausgerüstet ist, läuft wie folgt ab:
Die Suspension wird durch den Kanal 10 der ganzen Kammer 21 zu geführt bis diese vollständig gefüllt ist. Damit das Filtrat entweichen kann, wird es über die Kanäle 11 abgeleitet. Gleichzeitig werden durch das Filtermedium 19 die Feststoffanteile als Filterkuchen zurückgehalten. Der sich gebildete Filterkuchen wird gegen jeweils zwischen zwei Membranheizkammerfilterplatten 2 angeordnete Metallheizkammerfilterplatten 1 durch Anpressen der Membranen 24 an den Filterkuchen mit Hilfe eines Gases oder einer Flüssigkeit bei gleichzeitigem Aufheizen der Metallheizkammerfilterplatten 1 und der Filterkuchen gedrückt.
Der Brüdenraum 4 ist mit der Vakuumanlage verbunden und wird durch diese evakuiert, wobei die Brüden abgezogen werden. Der so eingeleitete Trocknungsschritt wird anschließend wieder durch Befüllen des Brüdenraumes 4 und des Porenraumes mit Luft oder Inertgas unterbrochen. Trocknungs- und Ruhephase werden abwechselnd so oft wiederholt, bis der beabsichtigte Trocknungsgrad erreicht ist. Der getrocknete Filterkuchen wird am Ende des Prozesses durch Öffnen der Filterpresse entfernt.

Durch den mehrfachen Wechsel zwischen Anlegen eines Vakuums und Befüllen des Brüdenraumes 4 und des Porenraumes mit Luft oder Inertgas wird eine gegenüber den aus dem Stand der Technik bekannten Lösungen überraschende Steigerung der Trocknungsgeschwindigkeit erreicht, wobei die Trocknungszeiten auf einen Bruchteil der sonst bei der einfachen Vakuumtrocknung notwendigen Zeiten reduziert werden.

### Bezugszeichenliste:

- 1: Metallheizkammerfilterplatte
- 2: Membranheizkammerfilterplatte
- 3: Kombinierte Metall-Membranheizkammerfilterplatte
- 4: Drainagespalt (bei Filtration), Brüdenraum (bei Trocknung)
- 5: Metallplatte
- 6: Grundkörper
- 7: Stützwand
- 8: Kammerrand
- 9: Kammergrund, Filterfläche
- 10: Kanal (Suspensionszufuhr)
- 11: Kanal (Filtratablauf, Brüdenabzug)
- 12: Kanal (Heizmedium)
- 13: Heizraum
- 14: Dichtring
- 15: Verschraubung und Distanzstücke
- 16: Dehnungsfuge (umlaufend)
- 17: Ringkanal (umlaufend)
- 18: Drainagemedium
- 19: Filtermedium
- 20: halbe Kammer
- 21: ganze Kammer
- 22: Dichtfläche
- 23: Nachbarkammerfilterplatte
- 24: Membrane

## Patentansprüche

1. Verfahren zum Entfeuchten und Trocknen von Feststoff-Flüssigkeitsgemischen mit einer gemäß Anspruch 4 beschriebenen Vorrichtug durch die Anwendung folgender Schritte
a) Zuführung der zu behandelnden Suspension über den Kanal (10) in die Vorrichtung,
b) Ableiten des Filtrats über die Kanäle (11) bei gleichzeitigem Zurückhalten der Feststoffanteile als Filterkuchen durch das Filtermedium (19),
c) Aufheizen des Filterkuchens durch Einschalten des Heizkreislaufs,
d) Andrücken des bei der Entwässerung gebildeten Filterkuchens durch Membranpressung mit Hilfe eines Gases oder einer Flüssigkeit,
e) Anschliessen einer Vakuumanlage an die Kanäle (11) und Evakuieren des Brüdenraumes (4) und des Porenraumes im Filterkuchen, womit die Trocknung des Filterkuchens begonnen wird und sich durch den Entzug der Verdampfungsenergie aus dem Inneren des Filterkuchens der Filterkuchen abkühlt, **gekennzeichnet durch**
f) ein Befüllen des Brüdenraumes (4) und des Porenraumes im Filterkuchen mit Luft oder Inertgas von bis zu 1 bar Überdruck, womit eine Ruhephase bei der Trocknung eingeleitet wird, der Filterkuchen heizt wieder auf,
g) eine Wiederholung der Schritte e) und f) bis zum Erreichen des beabsichtigten Trocknungsgrades,
h) ein Abschalten des Heizkreislaufs und Beenden der Membrananpressung in bekannter Weise und
i) ein Entfernen des getrockneten Filterkuchens in bekannter Weise aus der Vorrichtung.

2. Verfahren zum Entfeuchten und Trocknen von Feststoff-Flüssigkeitsgemischen nach Anspruch 1, **dadurch gekennzeichnet, dass** das Andrücken des Filterkuchens an die Oberfläche der beheizten Metallheizkammerfilterplatte (1) beim Aufheizen vor der Trocknung in mehreren Druckstufen mit einem steigenden Druck, vorzugsweise in Druckstufen von 3 bar, erfolgt.

3. Verfahren zum Entfeuchten und Trocknen von Feststoff-Flüssigkeitsgemischen nach dem Anspruch 1, **gekennzeichnet dadurch, dass** die Belüftung der Vakuumanlage und des Drainageraumes (4) mit Luft oder Inertgas mit Hilfe eines regelbaren Ventils, das in Nachbarschaft zur Vakuumanlage angeordnet ist, nach einem frei wählbaren Programm zeit- und druckabhängig gesteuert wird und der Aufbau des Vakuums bei der Umschaltung auf Trocknung verzögert und die Verzögerung den anfallenden Brüdenmengen angepasst wird.

4. Verwendung einer Vorrichtung zur Durchführung des Verfahrens nach den Ansprüchen 1 bis 3, bestehend aus einem diskontinuierlich arbeitenden Filterpressentrockner
a) mit einer Zuführung für ein Feststoff-Flüssigkeitsgemisch in die Vorrichtung,
b) mit einer Vakuumanlage,
c) mit einer Luft- oder Inertgaszuführung zur Erzeugung einer Luft- oder Inertgasatmosphäre von bis zu 1 bar Überdruck,
d) mit einer definierten Anzahl von nebeneinander und parallel zueinander angeordneten Metallheizkammerfilterplatten (1) und/oder Membranheizkämmerfilterplatten (2),
e) mit zwischen den Metallheizkammerfilterplatten (1) und/oder Membranheizkammerfilterplatten (2), ausgebildeten ganzen Kammern (21) zur Aufnahme des zu behandelnden Feststoff-Flüssigkeitsgemischs,
f) mit einem Brüdenabzug (11),
g) wobei jede der Metallheizkammerfilterplatten (1) nach Punkt d) aus einem Grundkörper (6) mit beidseitig durch Stützwand (7) und Kammerrand (8) ausgebildeten halben Kammern (20) und beidseitig angeordneten Metallplatten (5) besteht und
h) jede der Membranheizkammerfilterplatten (2) nach Punkt d) aus einem Grundkörper (6) mit beidseitig durch Stützwand (7) und Kammerrand (8) ausgebildeten halben Kammern (20) und beidseitig angeordneten Membranen (24) besteht, **gekennzeichnet dadurch, dass**
i) die beiden Metallplatten (5) durch Verschraubungen gegen Distanzstücke (15) fest eingespannt und bei dem mittigen Kanal zur Suspensionszufuhr (10) zentriert und fest verschraubt sind und einen verwindungssteifen und druckstabilen Metallplattenkörper bilden,
j) der verwindungssteife und druckstabile Metallplattenkörper gegenüber dem Grundkörper (6) und der Stützwand (7) frei schwimmend gelagert ist zur Durchführung des Verfahrens nach den Ansprüchen 1 bis 3.

5. Verwendung nach Anspruch 4, **gekennzeichnet dadurch, dass** der diskontinuierlich arbeitende Filterpressentrockner mit einer definierten Anzahl von nebeneinander und parallel zueinander kombinierten Metall-Membranheizkammerfilterplatten (3) ausgerüstet ist, die aus einem Grundkörper (6) mit beidseitig durch Stützwand (7) und Kammerrand (8) ausgebildeten halben Kammern (19) besteht und auf der einen Seite mit einer Metallplatte (5) und auf der anderen Seite mit einer Membrane (24) ausgerüstet ist.

6. Verwendung nach den Ansprüchen 4 und 5, **gekennzeichnet dadurch, dass** im Grundkörper (6) im Bereich des Umfangs der Metallplatte (5) eine umlaufende Dehnungsfuge (17) und unterhalb ein umlaufender Ringkanal (16) eingearbeitet ist, die zugleich bei der Filtration den Filtratablauf (11) und bei der Trocknung den Brüdenabzug (11) bilden.

7. Verwendung nach den Ansprüchen 4 und 5, **dadurch gekennzeichnet, dass** die Metallplatte (5) eine glatte Oberfläche aufweist, an der ein separates Drainagemedium (18), bestehend aus einem Metall- oder Textilgewebe, angeordnet ist.

## Claims

1. Method for dewatering and drying solid-liquid mixtures using a device described according to claim 4, by applying the following steps:
a) supplying the suspension to be treated via the duct (10) into the device;
b) draining the filtrate via the ducts (11) while at the same time retaining the solid components as a filter cake by means of the filter medium (19);
c) heating the filter cake by switching on the heating circuit;
d) pressing the filter cake formed during dewatering by membrane pressing using a gas or a liquid;
e) connecting a vacuum unit to the ducts (11) and evacuating the vapour space (4) and the pore space in the filter cake, whereby the drying of the filter cake is started and the filter cake cools due to the extraction of the energy of evaporation from the interior of the filter cake, **characterised by**
f) filling the vapour space (4) and the pore space in the filter cake with air or inert gas to an excess pressure of up to 1 bar, whereby a rest phase is initiated during drying, the filter cake is heated up again;
g) repeating steps e) and f) until the intended degree of drying is reached;
h) switching off the heating circuit and terminating the membrane pressing in a known manner; and
i) removing the dried filter cake from the device in a known manner.

2. Method for dewatering and drying solid-liquid mixtures according to claim 1, **characterised in that** the filter cake is pressed onto the surface of the heated metal heating chamber filter plate (1) during the heating, prior to drying, in a plurality of pressure increments with increasing pressure, preferably in pressure increments of 3 bar.

3. Method for dewatering and drying solid-liquid mixtures according to claim 1, **characterised in that** ventilation of the vacuum unit and the drainage space (4) with air or inert gas is controlled by means of a controllable valve, which is arranged in the vicinity of the vacuum unit, according to a freely selectable program in a time and pressure-dependent manner, and the build-up of the vacuum is delayed at the time of the switchover to drying and the delay is adapted to the amounts of vapour generated.

4. Use of a device for carrying out the method according to claims 1 to 3, consisting of an intermittently operating filter press drier, comprising:
a) a supply into the device for a solid-liquid mixture;
b) a vacuum unit;
c) an air or inert gas supply for generating an air or inert gas atmosphere with an excess pressure of up to 1 bar;
d) a defined number of metal heating chamber filter plates (1) and/or membrane heating chamber filter plates (2) arranged next to and in parallel with one another;
e) whole chambers (21) formed between the metal heating chamber filter plates (1) and/or membrane heating chamber filter plates (2) for receiving the solid-liquid mixture to be treated;
f) a vapour outlet (11),
g) each of the metal heating chamber filter plates (1) according to d) consisting of a main body (6) having half chambers (20) formed on either side by a support wall (7) and a chamber edge (8) and metal plates (5) arranged on either side, and
h) each of the membrane heating chamber filter plates (2) according to d) consisting of a main body (6) having half chambers (20) formed on either side by a support wall (7) and a chamber edge (8) and membranes (24) arranged on either side,
**characterised in that**
i) the two metal plates (5) are clamped firmly by screw connections against spacers (15) and are centred and screwed firmly at the central duct for the suspension supply (10) and form a torsionally rigid, pressure-resistant metal plate body,
j) the torsionally rigid, pressure-resistant metal plate body is mounted floatingly in relation to the main body (6) and the support wall (7) in order to carry out the method according to claims 1 to 3.

5. Use according to claim 4, **characterised in that** the intermittently operating filter press drier is equipped with a defined number of metal membrane heating chamber filter plates (3), which are combined next to and in parallel with one another, which consist of a main body (6) having half chambers (19) formed on either side by a support wall (7) and a chamber edge (8) and is equipped with a metal plate (5) on one side and with a membrane (24) on the other side.

6. Use according to claims 4 and 5, **characterised in that** a circumferential expansion joint (17), and thereunder a circumferential annular duct (16), which also form the filtrate outlet (11) during filtration and the vapour outlet (11) during drying, are milled into the main body (6) in the region of the circumference of the metal plate (5).

7. Use according to claims 4 and 5, **characterised in that** the metal plate (5) has a smooth surface, on which a separate drainage medium (18), consisting of a metal fabric or textile fabric, is arranged.

## Revendications

1. Procédé de déshumidification et de séchage de mélanges solides-liquides utilisant un dispositif décrit dans la revendication 4, par l'application des étapes suivantes
a) amenée dans le dispositif de la suspension à traiter via le canal (10),
b) dérivation du filtrat via les canaux (11) avec retenue simultanée des fractions de matières solides en tant que gâteau de filtre par l'agent filtrant (19),
c) chauffage du gâteau de filtre par mise en marche du circuit de chauffage,
d) pression exercée sur le gâteau de filtre formé lors de la déshydratation par pressage à membrane à l'aide d'un gaz ou d'un liquide,
e) raccordement d'une installation de vide aux canaux (11) et évacuation de l'espace des buées (4) et de l'espace de pores dans le gâteau de filtre, avec quoi le séchage du gâteau de filtre est commencé et le gâteau de filtre se refroidit par l'extraction de l'énergie de vaporisation hors de l'intérieur du gâteau de filtre,
**caractérisé par**
f) un remplissage de l'espace des buées (4) et de l'espace de pores dans le gâteau de filtre avec de l'air ou un gaz inerte jusqu'à 1 bar de surpression, avec quoi une phase de repos est introduite lors du séchage, le gâteau de filtre se réchauffe de nouveau,
g) une répétition des étapes e) et f) jusqu'à l'obtention du degré de séchage envisagé,
h) une mise à l'arrêt du circuit de chauffage et l'arrêt du pressage à membrane d'une façon connue et
i) un enlèvement, hors du dispositif, du gâteau de filtre séché de façon connue.

2. Procédé de déshumidification et de séchage de mélanges solides-liquides selon la revendication 1, **caractérisé en ce que** la pression exercée sur le gâteau de filtre contre la surface de la plaque métallique de filtre de chambre de chauffage (1) chauffée lors du chauffage s'effectue avant le séchage en plusieurs niveaux de pression avec une pression croissante, de préférence par niveaux de pression de 3 bars.

3. Procédé de déshumidification et de séchage de mélanges solides-liquides selon la revendication 1, **caractérisé en ce que** la ventilation de l'installation de vide et de l'espace de drainage (4) avec de l'air ou un gaz inerte est commandée à l'aide d'une vanne réglable, qui est disposée au voisinage de l'installation de vide, en fonction du temps et de la pression selon un programme pouvant être librement sélectionné, et l'établissement du vide est temporisé lors de la commutation vers le séchage, et la temporisation est adaptée aux quantités de buées en présence.

4. Utilisation d'un dispositif pour la réalisation du procédé selon les revendications 1 à 3, composé d'un sécheur de filtre-presse travaillant de façon discontinu
a) avec une amenée dans le dispositif pour un mélange solides-liquides,
b) avec une installation de vide,
c) avec une amenée d'air ou de gaz inerte pour la production d'une atmosphère d'air ou de gaz inerte jusqu'à 1 bar de surpression,
d) avec un nombre défini de plaques métalliques de filtre de chambre de chauffage (1) et/ou de plaques de filtre de chambre de chauffage à membrane (2) disposées de façon juxtaposée et parallèle entre elles,
e) avec des chambres (21) complètes constituées entre les plaques métalliques de filtre de chambre de chauffage (1) et/ou les plaques de filtre de chambre de chauffage à membrane (2), pour la réception du mélange solides-liquides à traiter,
f) avec une extraction des buées (11),
g) chacune des plaques métalliques de filtre de chambre de chauffage (1) selon le point d) se composant d'un corps de base (6) avec des demi-chambres (20) constituées des deux côtés par une paroi d'appui (7) et par un bord de chambre (8) et de plaques métalliques (5) disposées des deux côtés et
h) chacune des plaques de filtre de chambre de chauffage à membrane (2) selon le point d) se composant d'un corps de base (6) avec des demi-chambres (20) constituées des deux côtés par une paroi d'appui (7) et par un bord de chambre (8) et de membranes (24) disposées des deux côtés,
**caractérisée en ce que**
i) les deux plaques métalliques (5) sont fermement serrées par des vissages contre des pièces d'écartement (15) et sont centrées et vissées fermement au niveau du canal central d'amenée de suspension (10) et forment un corps de plaques métalliques résistant à la torsion et stable à la pression,
j) le corps de plaques métalliques résistant à la torsion et stable à la pression est supporté de façon librement flottante par rapport au corps de base (6) et à la paroi d'appui (7) pour la réalisation du procédé selon les revendications 1 à 3.

5. Utilisation selon la revendication 4, **caractérisé en ce que** le sécheur à filtre-presse qui travaille de façon discontinue est équipé d'un nombre défini de plaques métalliques de filtre de chambre de chauffage à membrane (3) combinées juxtaposées et parallèles entre elles qui se composent d'un corps de base (6) avec des demi-chambres (19) constituées des deux côtés par une paroi d'appui (7) et par un bord de chambre (8), et sont équipées sur un côté d'une plaque métallique (5) et sur l'autre côté d'une membrane (24).

6. Utilisation selon les revendications 4 et 5, **caractérisé en ce que**, dans le corps de base (6), dans la zone de la périphérie de la plaque métallique (5), il est inséré un joint de dilatation (17) périphérique et au-dessous un canal annulaire (16) périphérique qui forment en même temps l'évacuation du filtrat (11) lors de la filtration et l'extraction des buées (11) lors du séchage.

7. Utilisation selon les revendications 4 et 5, **caractérisé en ce que** la plaque métallique (5) présente une surface lisse sur laquelle est disposé un agent de drainage (18) séparé composé d'un tissu métallique ou textile.
